# EUROPÄISCHE PATENTANMELDUNG

(11) **EP 1 995 840 A1**
(43) Veröffentlichungstag der Anmeldung: **26.11.2008**
(21) Anmeldenummer: 08008471.8
(22) Anmeldetag: 06.05.2008
(51) Int. Cl.: H02G 5/10

(54) **Stromsammelschienenanordnung**

(30) Priorität: 23.05.2007 DE 102007023980
(71) Anmelder: Rittal GmbH & Co. KG, 35745 Herborn (DE)
(72) Erfinder: Wagener, Hans, 35716 Herborn (DE)
(74) Vertreter: Fleck, Hermann-Josef

(57) **Zusammenfassung**

Die Erfindung bezieht sich auf eine Stromsammelschienenanordnung mit Stromsammelschienen (1). Eine Verminderung der Wärmeentwicklung wird dadurch erreicht, dass die Stromsammelschienen (1) zum Kühlen durch mindestens eine quer zu ihrer Längsrichtung an ihnen angebrachten, sie umfassenden fluiddurchströmten Wärmetauschereinheit (10) geführt sind (Fig. 1).

## Beschreibung

Die Erfindung bezieht sich auf eine Stromsammelschienenanordnung mit Stromsammelschienen.

Eine derartige Stromsammelschienenanordnung ist in der DE 100 01 462 C1 gezeigt. Hierbei sind im Querschnitt quadratische Stromsammelschienen in einem Schaltschrank mit im Querschnitt flachen rechteckförmigen Stromsammelschienen verbunden, die in Dickenrichtung voneinander beabstandet sind und einzelne Stränge aus paketierten Sammelschienen bilden.

Auch in der nicht vorveröffentlichten deutschen Patentanmeldung 10 2007 003 937.0-34 sind Stromsammelschienenanordnungen mit mehreren Strängen aus im Querschnitt rechteckförmigen paketierten Stromsammelschienen gezeigt. Der Aufbau von Strom führenden Strängen aus paketierten, voneinander beabstandeten flachen Stromsammelschienen hat u.a. den Vorteil, dass die einzelnen Stränge bei hohen Strömen durch umgebende Luft besser gekühlt werden als einstückige Stromsammelschienen, jedoch ist oft bei derartigen Niederspannungsschaltanlagen insbesondere die von den zugehörigen Leistungsschaltern erzeugte und auf die angeschlossenen Stromsammelschienen übertragene Verlustleistung so groß, dass die Umgebung etwa im Inneren eines Schaltschrankes über eine zulässige Temperatur aufgewärmt wird und eine aufwändige Raumklimatisierung erforderlich ist.
Der Erfindung liegt die Aufgabe zugrunde, in Verbindung mit einer Stromsammelschienenanordnung mit möglichst wenig Aufwand eine möglichst wirksame Kühlung zu erreichen.

Diese Aufgabe wird mit den Merkmalen des Anspruches 1 gelöst. Hierbei ist vorgesehen, dass die Stromsammelschienen zum Kühlen durch mindestens eine quer zu ihrer Längsrichtung an ihnen angebrachten, sie umfassenden fluiddurchströmten Wärmetauschereinheit geführt sind.

Mit diesen Maßnahmen wird eine Direkt-Luftkühlung für Stromsammelschienen erhalten. Diese kann beispielsweise in der Nähe eines mit den Stromsammelschienen verbundenen Leistungsschalters angeordnet werden, so dass eine Wärmeübertragung über die Stromsammelschienen in die Umgebung, beispielsweise im Inneren eines Schaltschrankes oder im Bereich eines Racks über die Stromsammelschienen weitgehend unterbunden wird. Auch wird die Stromführung durch die Stromsammelschienen begünstigt.

Ein für ein mehrphasiges Sammelschienensystem vorteilhafter Aufbau besteht darin, dass die Wärmetauschereinheit mehrere Sammelschienenaufnahmen für mehrere Stränge von Stromsammelschienen aufweist und in Querrichtung zu den Stromsammelschienen durchströmt ist. Hierbei sind in der Regel die Stränge verschiedenen Phasen der Stromversorgung zugeordnet.

Für eine wirkungsvolle Kühlung und zum Vermeiden einer Wärmebelastung der Umgebung sind des Weiteren die Maßnahmen von Vorteil, dass die Wärmetauschereinheit an ihren in Querrichtung der Stromsammelschienen voneinander beabstandeten Endbereichen einerseits mit einem eingangsseitigen und andererseits mit einem ausgangsseitigen Anschluss für das Fluid versehen ist. Das mit der Wärme von den Stromsammelschienen beladene Fluid kann auf diese Weise an geeigneter Stelle außerhalb des Umgebungsbereichs der Stromsammelschienen die Wärme abgeben und eingangsseitig kann das auf eine geeignete Temperatur heruntergekühlte Fluid für eine wirkungsvolle Kühlung zugeführt werden.

Ist vorgesehen, dass im Bereich der Stromsammelschienen-Stränge jeweils Strang individuelle Strömungskammern gebildet sind, denen über ihnen zugeordnete Fluidleitkanäle unmittelbar gekühltes Fluid zugeführt wird, kann jedem Strang bzw. jeder entsprechenden Phase gekühltes Fluid für eine effektive Kühlung der betreffenden Stromsammelschienen zugeführt werden. Die Luftverteilung erfolgt dabei am Eingang der Wärmetauschereinheit auf die Fluidleitkanäle, die zu den einzelnen Strömungskammern führen.

Eine weitere vorteilhafte Ausgestaltung für die Kühlung und Abfuhr der Wärme besteht darin, dass das Fluid in einem Kreislauf geführt ist, in dem ein Kühlaggregat angeordnet ist, und dass das Fluid nach Durchströmung der Wärmetauschereinheit vor Wiederzuführung zu derselben gekühlt wird. Durch den geschlossenen Kreislauf wird das gekühlte Fluid, insbesondere Luft, über einen Fluidvorlauf in die Fluidleitkanäle der Wärmetauschereinheit geleitet und von diesem zu einem weiteren, externen Wärmetauscheraggregat, wie z. B. einem Verdampfer-Kühlgerät, einem Rückkühlanlagen-Wärmetauscher oder dgl. geführt. Eine Leistungssteigerung der Wärmeübertragung im Kreislauf kann durch eine Regelung des Fluid- bzw. Luftdurchsatzes in Form einer Druckerhöhung erfolgen.

Zum Erzielen einer geeigneten Strömung sind die Maßnahmen von Vorteil, dass zum Zuführen des Fluids zu der Wärmetauschereinheit und/oder zum Abführen von derselben eine Strömungserzeugungseinheit vorhanden ist. Die Strömungserzeugungseinheit ist dabei z. B. eine Filterlüftereinheit, die im Kreislauf in einem Leitungsabschnitt oder in einem Kühlaggregat angeordnet ist.

Hierbei bestehen verschiedene Ausgestaltungsmöglichkeiten darin, dass die Strömungserzeugungseinheit in dem Kreislauf in Strömungsrichtung vor der Wärmetauschereinheit oder nach derselben angeordnet ist.

Eine für den Aufbau und den Betrieb vorteilhafte Ausgestaltung besteht darin, dass das Fluid Luft ist.

Die Anordnung und der Aufbau werden dadurch begünstigt, dass der Kreislauf zur Führung des Fluids in Strömungsrichtung vor der Wärmetauschereinheit zuführende und hinter der Wärmetauschereinheit abführende Schläuche oder Rohrleitungen aufweist.

Zu einer wirkungsvollen Kühlung tragen des Weiteren die Merkmale bei, dass die Stränge von Stromsammelschienen jeweils aus mehreren, im Querschnitt rechteckförmigen, in ihrer Dickenrichtung über Luftspalte voneinander beabstandeten einzelnen Stromsammelschienen gebildet sind.

Der Aufbau und die Montage werden ferner dadurch begünstigt, dass die Wärmetauschereinheit quaderförmig aus zwei Halbschalen aus elektrisch isolierendem Material gebildet ist, wobei eine Trennebene zwischen den beiden Halbschalen im Bereich der Stromsammelschienen liegt.

Die Erfindung wird nachfolgend anhand von Ausführungsbeispielen unter Bezugnahme auf die Zeichnungen näher erläutert. Es zeigen:
- Fig. 1: eine mit einer Wärmetauschereinheit versehene Stromsammelschienenanordnung in schematischer Darstellung,
- Fig. 2: die in Fig. 1 gezeigte Stromsammelschienenanordnung in perspektivischer Ansicht,
- Fig. 3A und 3B: eine in eine Schaltschrankanordnung eingebaute Stromsammelschienenanordnung mit einer Wärmetauschereinheit in perspektivischer Ansicht bzw. einer Vorderansicht,
- Fig. 4A und 4B: eine in einem Fluid-Kreislauf in Verbindung mit der Wärmetauschereinheit angeordnete Strömungserzeugungseinheit in perspektivischer Ansicht in zusammengebauter bzw. auseinander genommener Darstellung,
- Fig. 5A und 5B: eine Wärmetauschereinheit in perspektivischer Ansicht bzw. in Draufsicht,
- Fig. 6: die in Fig. 5A und 5B gezeigte Wärmetauschereinheit in auseinander genommener Darstellung,
- Fig. 7: eine Hälfte der Wärmetauschereinheit in perspektivischer Ansicht,
- Fig. 8: Verschlussstücke der Wärmetauschereinheit in perspektivischer Ansicht mit einer vergrößerten Darstellung eines Endabschnittes,
- Fig. 9: einen Ausschnitt einer in einen Schaltschrank eingebauten Stromsammelschienenanordnung mit Wärmetauschereinheit und einen zugehörigen vergrößerten Ausschnitt,
- Fig. 10A, 10B und 10C: die Wärmetauschereinheit in perspektivischer, gläserner Darstellung mit in verschiedenen Strömungskammern schematisch dargestellten Luftströmungen.

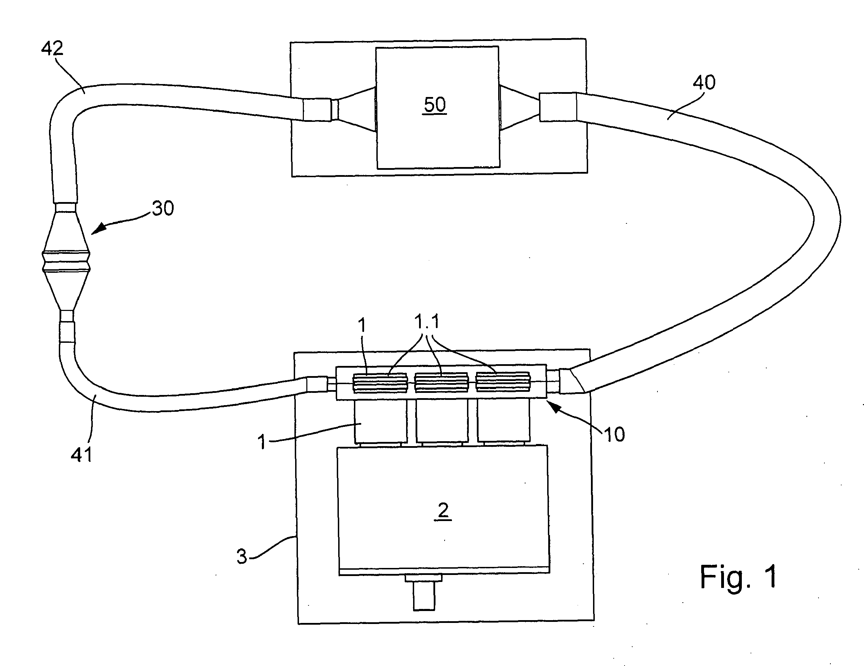

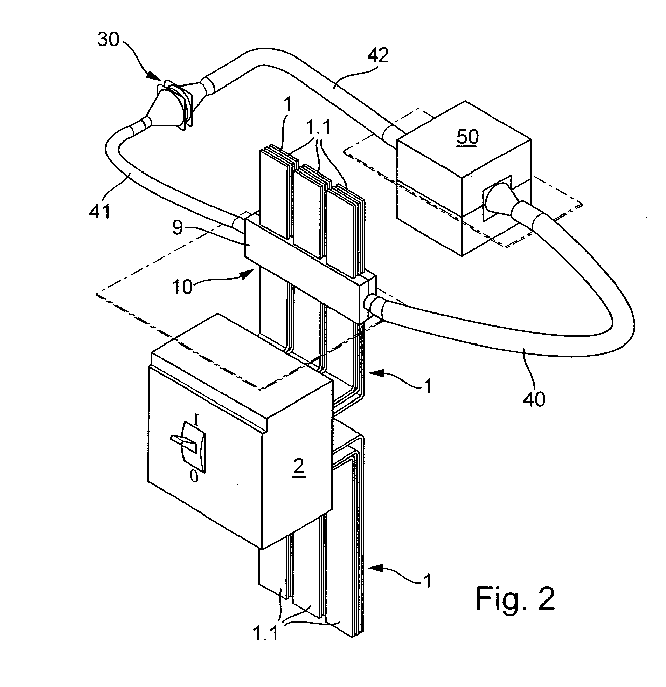

Fig. 1 zeigt eine Stromsammelschienenanordnung mit mehreren Stromsammelschienen 1, die an einen Leistungsschalter 2 angeschlossen sind und in einem Schaltschrank 3 montiert sind. Mehrere (nämlich vorliegend drei) voneinander in Dickenrichtung unter Bildung eines Luftspalts voneinander beabstandete Stromsammelschienen 1 bilden jeweils einen Strang 1.1 entsprechend unterschiedlicher Phasen einer elektrischen Energieversorgung, insbesondere einer Niederspannungsschaltanlage. An der Stromsammelschienenanordnung ist quer zur Längserstreckung der Stromsammelschienen 1 eine Wärmetauschereinheit 10 angebracht, die alle Stränge 1.1 der Stromsammelschienen 1 umfasst und über zuführende und abführende Schläuche 40, 41 sowie einen weiteren Schlauch 42 an ein Kühlaggregat 50 angeschlossen ist. Zwischen dem zuführenden Schlauch 41 und dem weiteren Schlauch 42 ist eine Strömungserzeugungseinheit 30, z. B. in Form einer Luftfördereinheit, etwa einer Filterlüftereinheit, angeschlossen. Wie die perspektivische Darstellung nach Fig. 2 zeigt, erstreckt sich die Wärmetauschereinheit 10 auch über einen gewissen Bereich von einigen Zentimetern oder Dezimetern in Längsrichtung der Stromsammelschienen 1 und ist in der mit einem Pfeil dargestellten Strömungsrichtung 9 von dem Strömungsmedium in Form des Fluids durchströmt.

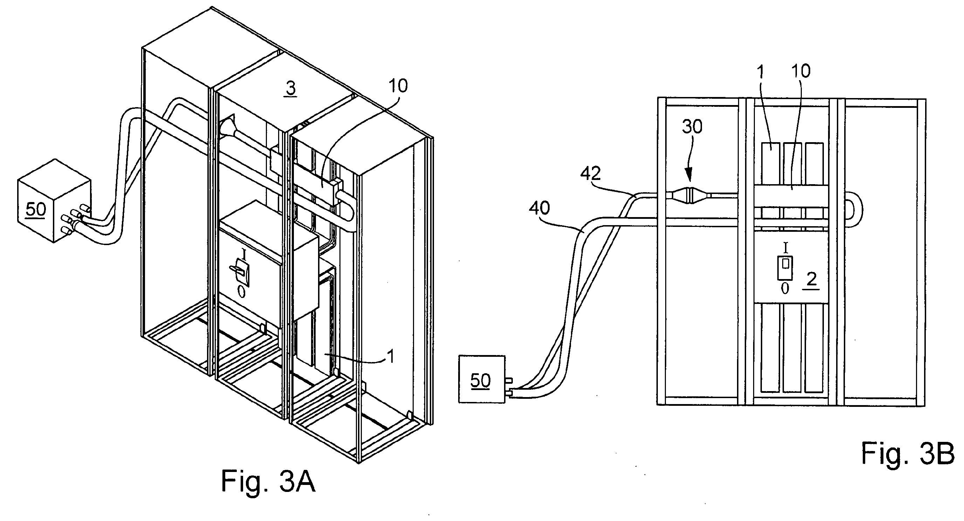

Die an den Leistungsschalter 2 angeschlossenen Stränge 1.1 der Stromsammelschienen werden insbesondere auch mit der in dem Leistungsschalter 2 erzeugten Verlustwärme beaufschlagt und führen diese an die Umgebung durch Wärmestrahlung und Wärmeübertragung an die umgebende Luft an das Innere des Schaltschrankes ab. Durch die Wärmetauschereinheit 10, die vorteilhaft in der Nähe des Leistungsschalters 2 an den Stromsammelschienen 1 angeordnet und elektrisch isolierend ausgebildet ist, wird die Verlustwärme vermittels des die Wärmetauschereinheit 10 durchströmenden Fluids abgeführt und über den abführenden Schlauch 40 zu dem Kühlaggregat 50 geführt, in dem eine Kühlung des Fluids erfolgt. Anschließend wird das gekühlte Fluid wiederum über den weiteren Schlauch 42 und den zuführenden Schlauch 41 unter Wirkung der zwischengeschalteten Strömungserzeugungseinheit 30 der Wärmetauschereinheit 10 zur Kühlung der Stromsammelschienen 1 zugeführt. Mit dieser Direkt-Kühlung der Stromsammelschienen 1 wird mit hohem Wirkungsgrad eine Kühlung der an dem Leistungsschalter 2 angeschlossenen Stromsammelschienen 1 erreicht, wobei das Fluid, vorzugsweise Luft, über den geschlossenen Kreislauf von der Wärmetauschereinheit 10 zu dem Kühlaggregat 50, wie z. B. einem Verdampfer-Kühlgerät, einem Rückkühlanlagen-Wärmetauscher oder dgl. geführt wird. Das Kühlaggregat 50 kann praktisch an beliebiger Stelle, insbesondere auch außerhalb der die Stromsammelschienenanordnung enthaltenden Schaltschrankanordnung positioniert werden, so dass eine Aufwärmung des Schaltschrankinnenraumes und auch der Umgebung der Schaltschrankanordnung über die Stromsammelschienen 1 vermieden wird. Die Anordnung des Kühlaggregats 50 außerhalb der die Stromsammelschienenanordnung enthaltenden Schaltschrankanordnung ist in den Fig. 3A und 3B dargestellt.

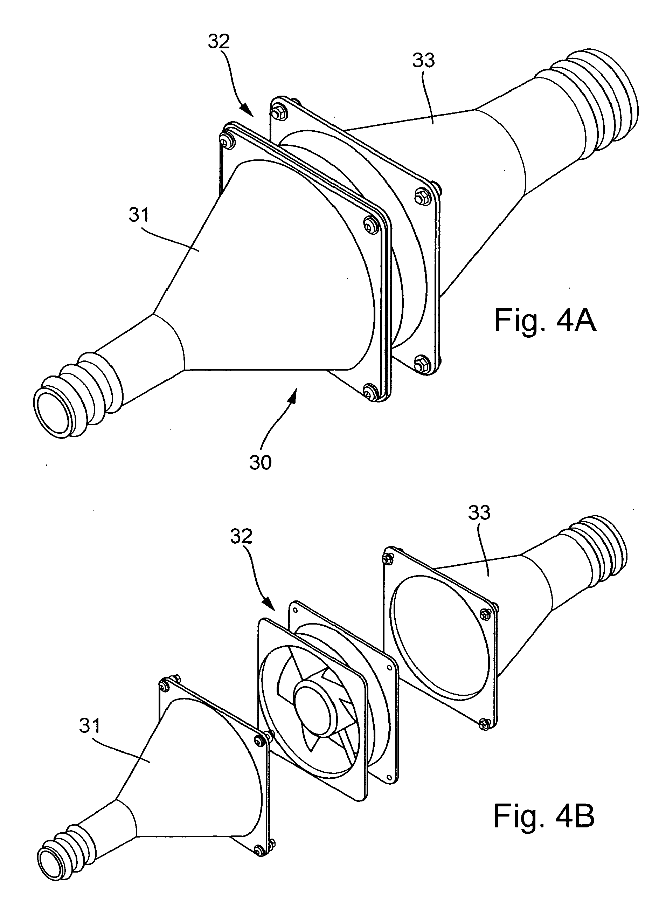

Die Fig. 4A und 4B zeigen die Strömungserzeugungseinheit 30 in zusammengebautem und auseinander genommenem Zustand in einem Ausführungsbeispiel. Ein Lüfter 32, insbesondere Filterlüfter, der mit einem temperaturbeständigen Metalllüfterblatt bestückt sein kann, ist zwischen einem saugseitigen Führungstrichter 31 und einem druckseitigen Führungstrichter 33 angeordnet, wobei die beiden Führungstrichter 31, 33 mit jeweiligen Anschlussstutzen für die Schläuche 42 und 41 versehen sind und auf ihrer Öffnungsseite mit der Filterlüftereinheit 32 verbunden, beispielsweise verschraubt oder verrastet sind.

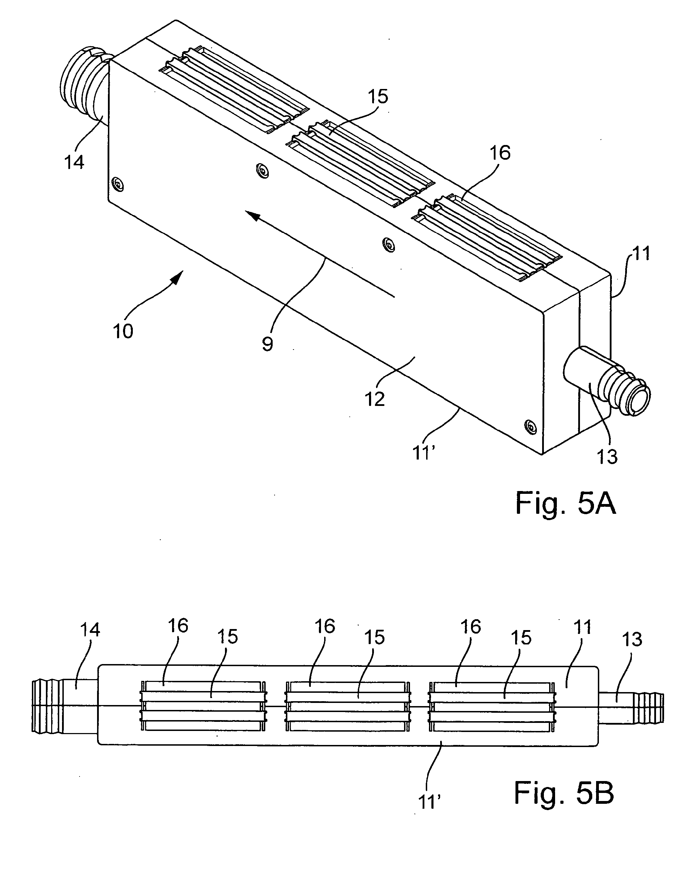

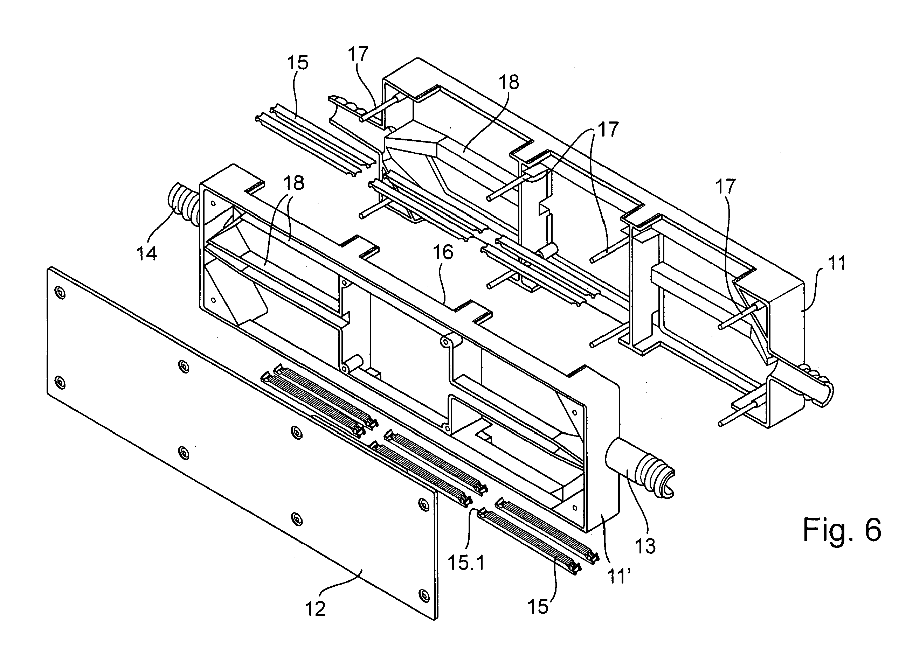

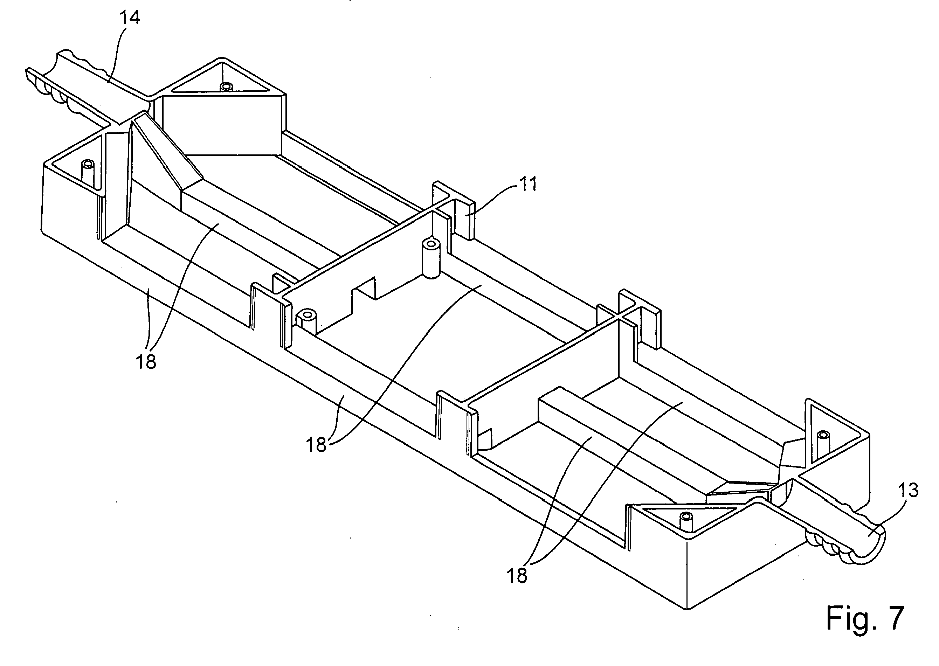

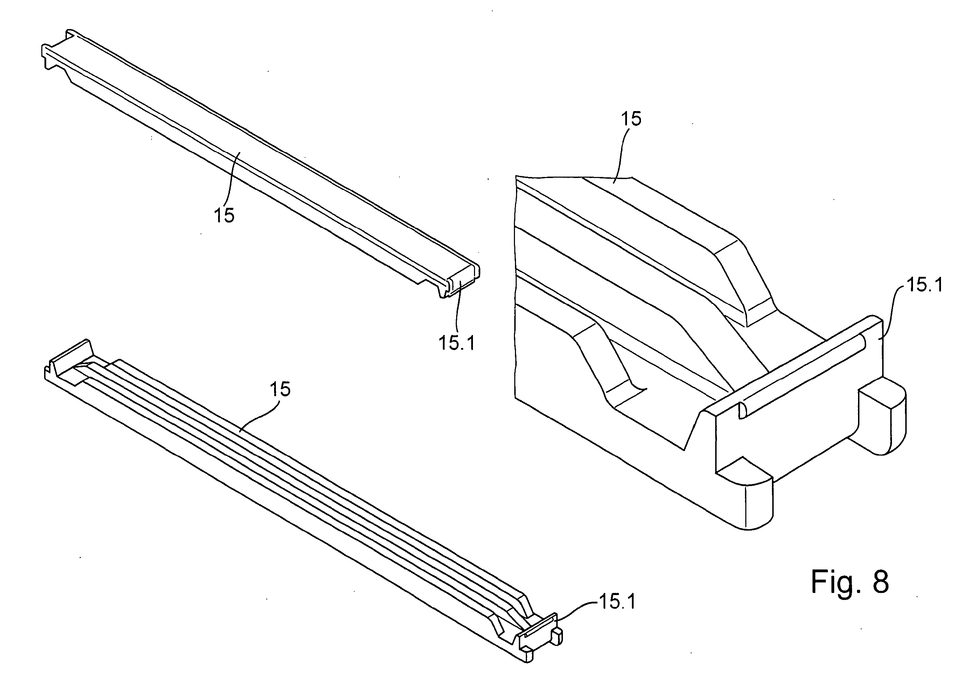

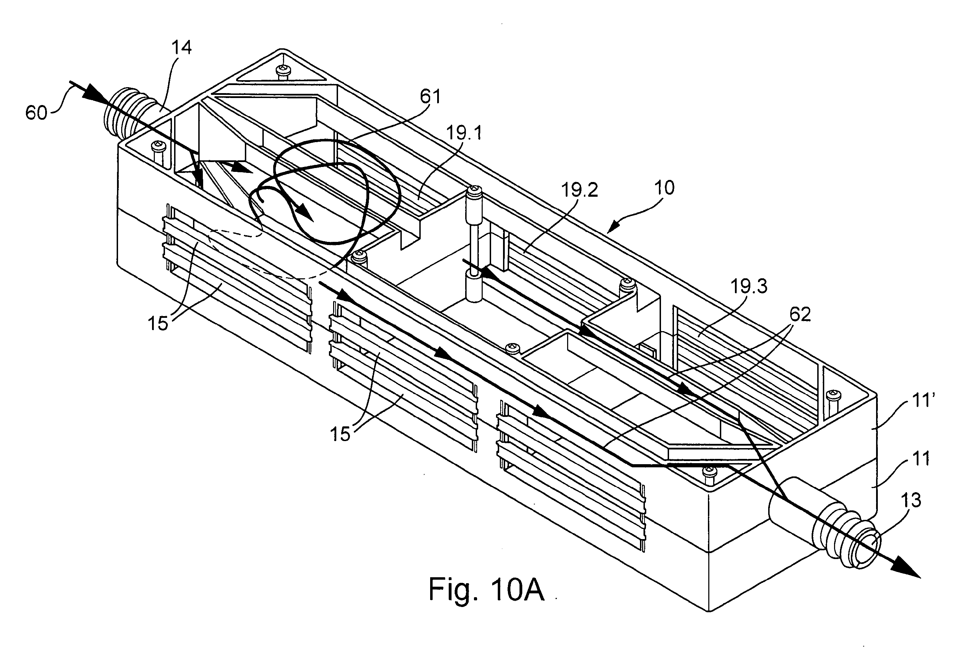

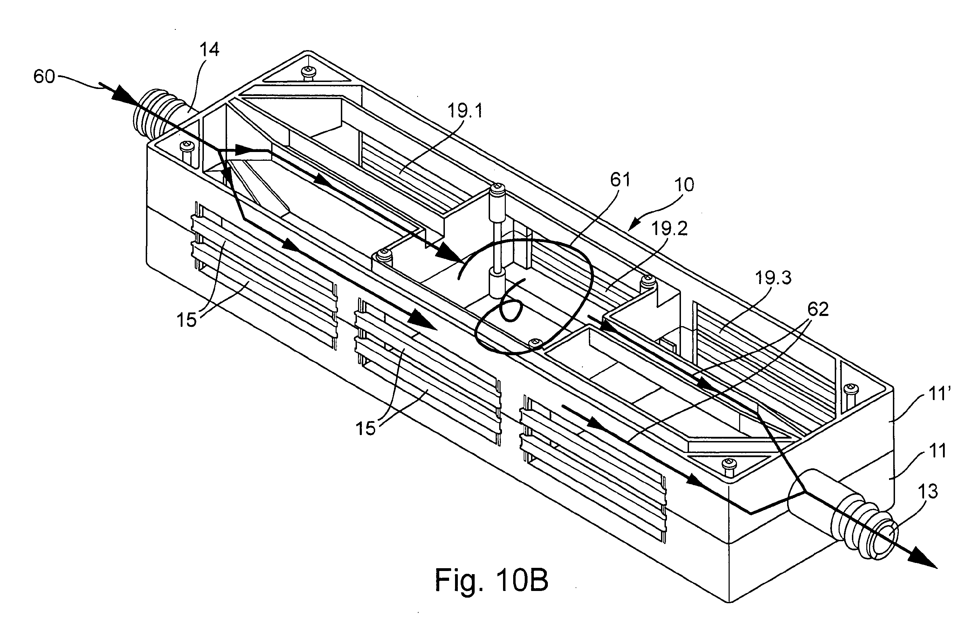

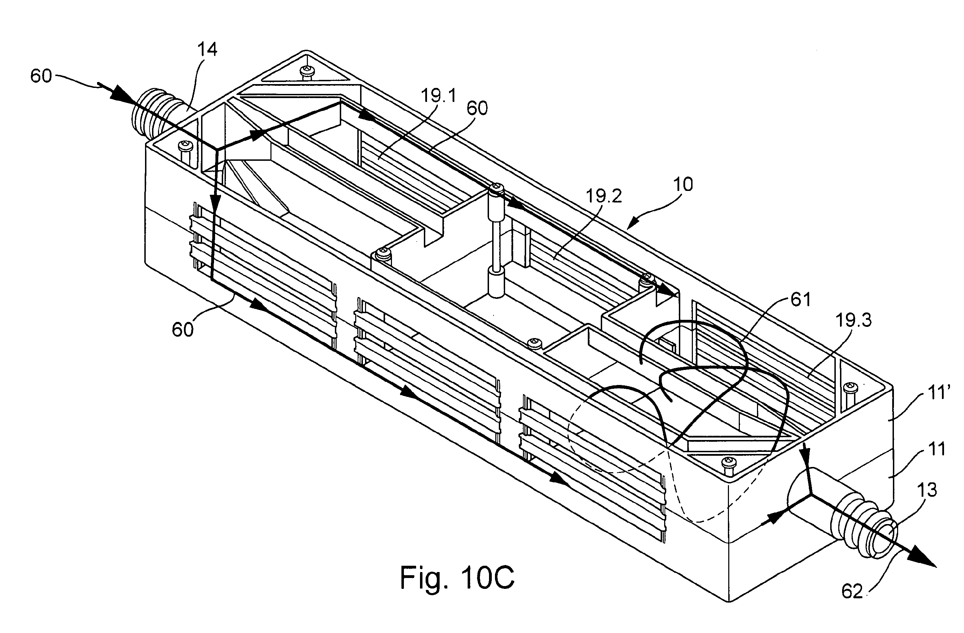

Die Fig. 5A, 5B, 6 und 7 zeigen Einzelheiten der Wärmetauschereinheit 10. Diese besteht aus einem im Wesentlichen quaderförmigen Mittelteil, an dessen bezüglich der Längserstreckung voneinander beabstandeten schmalen Stirnseiten einerseits ein eingangsseitiger Anschlussstutzen 14 für den zuführenden Schlauch 41 und andererseits ein ausgangsseitiger Anschlussstutzen 13 für den abführenden Schlauch 40 angeformt sind. Auf der einen breiten Längsseite ist ein Deckel 12 aufgebracht, der entweder aufgeschraubt, aufgerastet oder angeformt ist, während die andere breite Längsseite mit einem angeformten, angeschraubten oder aufgerasteten Bodenteil versehen ist. In den sich gegenüberliegenden schmalen Längsseiten sind Öffnungen von Sammelschienenaufnahmen 16 angeordnet, die strangweise in Längsrichtung der Wärmetauschereinheit 10 voneinander beabstandet und durch Querstege getrennt sind, während die den einzelnen Strängen 1.1 zugeordneten Aufnahmen ihrerseits mittels längs verlaufender Verschlussstücke 15 in Teilöffnungen für die einzelnen Stromsammelschienen 1 der betreffenden Stränge 1.1 unterteilt sind. Die Teilöffnungen sind an den Querschnitt der einzelnen Stromsammelschienen 1 angepasst, so dass sich bei eingesetzten Stromsammelschienen nach außen ein dichter Abschluss der Wärmetauschereinheit 10 um die Stromsammelschienen 1 herum ergibt. Zum einfachen, auch nachträglichen Anlegen der Wärmetauschereinheit 10 ist diese aus zwei Halbschalen 11, 11' aus elektrisch isolierenden Material, vorzugsweise Kunststoff, zusammengesetzt, die miteinander verschraubt oder verrastet werden, wobei eine Trennungsebene zwischen den beiden Halbschalen 11, 11' in Längsrichtung der Wärmetauschereinheit 10 im Bereich der Stränge 1.1 verläuft und sich mittig durch die Anschlussstutzen 13, 14 erstreckt. Die Verschlussstücke 15, beispielsweise ebenfalls aus isolierendem Kunststoff, sind separat und können zwischen den Stromsammelschienen 1 in die zusammengesetzten Halbschalen 11, 11' eingesetzt und aus diesen auch wieder entfernt werden. Die Fixierung erfolgt vorteilhaft durch Verrastung. Fig. 6 zeigt die Wärmetauschereinheit 10 mit den beiden Halbschalen 11, 11', dem Deckel 12 und den Verschlussstücken 15 in auseinander genommener Darstellung, wobei an den Endabschnitten der Verschlussstücke 15 Rastabschnitte 15.1 zu erkennen sind, die in Fig. 8 näher dargestellt sind. In den beiden Halbschalen 11, 11' sind für die Stränge 1.1 der Stromsammelschienen 1 jeweilige Kammern angeordnet, die durch Querstege voneinander getrennt sind. Die einzelnen Kammern bilden jeweilige Strömungskammern 19.1, 19.2, 19.3, wie in den Fig. 10A, 10B und 10C näher dargestellt, und stehen mit jeweils zugeordneten, in Längsrichtung verlaufenden Führungskanälen 18 in Verbindung, die zu dem einströmseitigen Anschlussstutzen 14 führen. Über die Luftleitkanäle 18 wird den Strömungskammern 19.1, 19.2, 19.3 jeweils getrennt gekühltes Fluid, insbesondere also Kühlluft, zugeführt. Fig. 6 zeigt ferner Schraubstifte 7 zum dichten Verspannen der Halbschalen 11, 11' und gegebenenfalls auch zum Anbringen des Deckels 12.

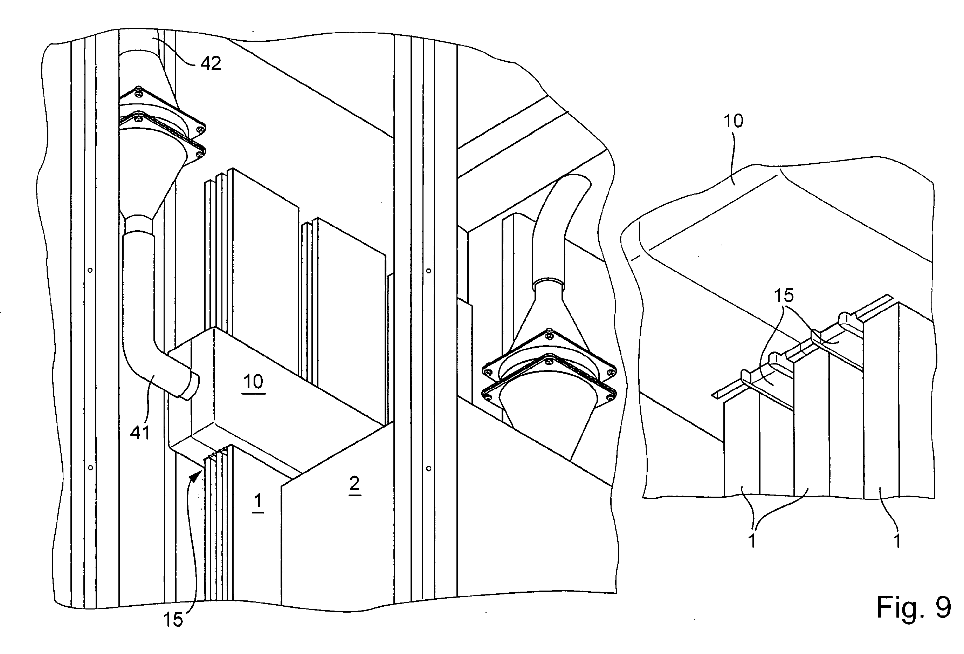

Fig. 9 zeigt einen Ausschnitt einer in einen Schaltschrank 3 eingebauten Stromsammelschienenanordnung mit angebrachter Wärmetauschereinheit 10 mit einer detaillierten Darstellung (rechts), aus der auch die dichtende Einbringung der Verschlussstücke 15 ersichtlich ist.

Die bereits genannten Fig. 10A, 10B und 10C zeigen die Wärmetauschereinheit 10 in gläserner Ansicht, wobei insbesondere auch die zu den einzelnen Strömungskammern 19.1, 19.2, 19.3 führenden Strömungskanäle und die Verwirbelungen bzw. turbulenten Strömungen des Fluids, insbesondere also der Luft, dargestellt sind. Ausströmseitig werden keine besonderen, den einzelnen Kammern zugeordneten Kanäle benötigt. Die einströmende Kaltluft 60, die turbulente Luftströmung 61 in den einzelnen Kammern 19.1, 19.2 bzw. 19.3 sowie die ausströmende angewärmte Luft 62 sind durch Strömungspfeile kenntlich gemacht. Die Luftverteilung zu den einzelnen Strömungskammern 19.1, 19.2, 19.3 erfolgt am Lufteingang, so dass die kühle Luft den einzelnen Stromsammelschienen 1 wirkungsvoll die Wärmeenergie entziehen kann.

Die Luft kann mit einem Drucklüfter mit geringem Überdruck der Wärmetauschereinheit 10 zugeführt werden. Eine geeignete Leistungssteigerung der Wärmeübertragung kann durch Regelung des Luftdurchsatzes in Form einer Druckerhöhung bewirkt werden. Weitere mögliche Anpassungsmaßnahmen für die Kühlleistung sind die Dimensionierung der Luftströmungskammer 19.1, 19.2, 19.3 und z. B. die Ausdehnung derselben in Längsrichtung der Stromsammelschienen 1, das durchsetzenden Luftvolumen und die Vorgabe und Einregelung der Kühltemperatur in dem Kühlaggregat 50.

## Patentansprüche

1. Stromsammelschienenanordnung mit Stromsammelschienen (1),
**dadurch gekennzeichnet,**
**dass** die Stromsammelschienen (1) zum Kühlen durch mindestens eine quer zu ihrer Längsrichtung an ihnen angebrachten, sie umfassenden fluiddurchströmten Wärmetauschereinheit (10) geführt sind.

2. Stromsammelschienenanordnung nach Anspruch 1,
**dadurch gekennzeichnet,**
**dass** die Wärmetauschereinheit (10) mehrere Sammelschienenaufnahmen (16) für mehrere Stränge (1.1) von Stromsammelschienen (1) aufweist und in Querrichtung zu den Stromsammelschienen (1) durchströmt ist.

3. Stromsammelschienenanordnung nach Anspruch 1 oder 2,
**dadurch gekennzeichnet,**
**dass** die Wärmetauschereinheit (10) an ihren in Querrichtung der Stromsammelschienen (1) voneinander beabstandeten Endbereichen einerseits mit einem eingangsseitigen und andererseits mit einem ausgangsseitigen Anschluss (13, 14) für das Fluid versehen ist.

4. Stromsammelschienenanordnung nach Anspruch 2 oder 3,
**dadurch gekennzeichnet,**
**dass** im Bereich der Stromsammelschienen-Stränge (1.1) jeweils Strang individuelle Strömungskammern (19.1, 19.2, 19.3) gebildet sind, denen über ihnen zugeordnete Fluidleitkanäle (18) unmittelbar gekühltes Fluid zugeführt wird.

5. Stromsammelschienenanordnung nach einem der vorhergehenden Ansprüche, **dadurch gekennzeichnet,**
**dass** das Fluid in einem Kreislauf geführt ist, in dem ein Kühlaggregat (50) angeordnet ist, und
**dass** das Fluid nach Durchströmung der Wärmetauschereinheit (10) vor Wiederzuführung zu derselben gekühlt wird.

6. Stromsammelschienenanordnung nach einem der vorhergehenden Ansprüche, **dadurch gekennzeichnet,**
**dass** zum Zuführen des Fluids zu der Wärmetauschereinheit (10) und/oder zum Abführen von derselben eine Strömungserzeugungseinheit (30) vorhanden ist.

7. Stromsammelschienenanordnung nach Anspruch 6,
**dadurch gekennzeichnet,**
**dass** die Strömungserzeugungseinheit (30) in dem Kreislauf in Strömungsrichtung (9) vor der Wärmetauschereinheit (10) oder nach derselben angeordnet ist.

8. Stromsammelschienenanordnung nach einem der vorhergehenden Ansprüche, **dadurch gekennzeichnet,**
**dass** das Fluid Luft ist.

9. Stromsammelschienenanordnung nach einem der Ansprüche 5 bis 8,
**dadurch gekennzeichnet,**
**dass** der Kreislauf zur Führung des Fluids in Strömungsrichtung vor der Wärmetauschereinheit (10) zuführende und hinter der Wärmetauschereinheit (10) abführende Schläuche (40, 41) oder Rohrleitungen aufweist.

10. Stromsammelschienenanordnung nach einem der Ansprüche 2 bis 9,
**dadurch gekennzeichnet,**
**dass** die Stränge (1.1) von Stromsammelschienen (1) jeweils aus mehreren, im Querschnitt rechteckförmigen, in ihrer Dickenrichtung über Luftspalte voneinander beabstandeten einzelnen Stromsammelschienen (1) gebildet sind.

11. Stromsammelschienenanordnung nach einem der vorhergehenden Ansprüche, **dadurch gekennzeichnet,**
**dass** die Wärmetauschereinheit (10) quaderförmig aus zwei Halbschalen (11, 11') aus elektrisch isolierendem Material gebildet ist, wobei eine Trennebene zwischen den beiden Halbschalen im Bereich der Stromsammelschienen (1) liegt.
